# EUROPEAN PATENT APPLICATION

(11) **EP 4 818 271 A1**
(43) Date of publication of application: **07.10.2026**
(21) Application number: 25382327.2
(22) Date of filing: 01.04.2025
(51) Int. Cl.: C09D 5/00

(54) **COMPOSITION SUITABLE FOR THE PREPARATION OF A PAINT**

(71) Applicant: PURE.TECH Future Industry, SL, 08019 Barcelona (ES)
(72) Inventor: SOLLAZZO, Aldo, 08010 Barcelona (ES); RANGHOLIA, Chiragkumar, 08010 Barcelona (ES); DUDHAT, Vandan, Tempe, 85288 (US)
(74) Representative: Torner, Juncosa I Associats, SL

(57) **Abstract**

The present disclosure relates to a composition suitable for the preparation of a paint or a coating comprising the following components, in % by weight with respect to the total weight of the composition: Silicon dioxide: between 38% and 62%; Aluminum dioxide: between 3% and 18%; Calcium oxide: between 6% and 17%; Titanium dioxide: between 5% and 12%; Ferric oxide: between 12% and 20%; and Magnesium oxide: between 10% and 15%. The present disclosure also relates to a paint or a coating comprising the composition disclosed herein.

## Description

### TECHNICAL FIELD

The present disclosure is related to a composition suitable for the preparation of a paint or coating and to a paint or coating comprising the composition.

### BACKGROUND ART

The escalating global concerns surrounding greenhouse gas emissions and their detrimental effects on climate change and the environment have prompted governments, organizations, and individuals to actively seek innovative solutions for sustainability and emissions reduction.

These innovative solutions often entail the development of advanced material properties capable of adsorbing greenhouse gases, industrial compatibility to feasible integrate new products into established process and environmental soundness to ensure that those solutions are environmentally sustainable and do not constitute greenwashing.

One of the fields in which the reduction of greenhouse gases and improvement of air quality may be considered is in the development of compositions for paints and coatings, that may have a wide range of applications, including textiles and construction materials.

Previously in the art, several solutions trying to improve the problems listed above have been developed.

For instance, document US2009061246 A1 discloses a self-cleaning, de-polluting paint comprising from about 5% to about 40% by volume photocatalytic titanium dioxide in substantially pure anatase form, said photocatalytic titanium dioxide being characterized by an average crystallite size between about 5 nm and about 30 nm and having photocatalytic activity in the presence of visible light; one or more additional pigments, such that the total pigment volume concentration of said paint, inclusive of said photocatalytic titanium dioxide, is at least about 65%; and a styrene acrylic copolymer binder; said paint being capable of substantially reducing NOx compounds immediately after a dried coating of said paint is formed on a substrate, in the absence of prior activation with water.

Document CN112375473 A discloses an environmentally-friendly antibacterial water-based paint composition, characterized in that it is prepared from the following components by mass: 20-30 parts of water-based resin; 5-10 parts of acrylates; 10-30 parts of polyurethane; 1-20 parts of nanoparticles; 1-10 parts of nanometer AZO; 1-10 parts of a curing agent; and 10-50 parts of water, wherein, the water-based resin is selected from one of water-based alkyd resins, water-based epoxy ester resins or water-based acrylic resins and the nano particles include nano titanium dioxide and/or nano silica.

Document WO2005083014 A1 discloses a coating composition for the formation of an inorganic layer on the surface of a substrate, comprising at least - an efficient amount of photocatalytic titanium dioxide particles, - an opacifying agent, - particles of an inorganic binder, an organic binder, and - a solvent, wherein said organic binder and photocatalytic titanium dioxide particles are present in a weight ratio, photocatalytic titanium dioxide/organic binder ranging from 0.1 to 6.

Document WO2018146364 A1 discloses a composition for mineralizing gases of carbon dioxide and oxides of nitrogen comprising a mixture of magnesium (between 1 and 25% by weight), iron (between 1 and 23%), calcium monoxide (between 1 and 25%), titanium dioxide (between 0.1 and 1%) and silicon dioxide (between 16 and 75%), with a particle diameter between 100 nm and 4000 µm.

However, there is still a need to obtain compositions that have an effect on greenhouse gases, improve air quality, are environmentally sound and economically viable.

### SUMMARY OF THE DISCLOSURE

In order to address one or more of the foregoing problems, one aspect of the present disclosure relates to a composition suitable for the preparation of a paint or a coating comprising the following components, in % by weight with respect to the total weight of the composition: Silicon dioxide: between 38% and 62%; Aluminum oxide: between 3% and 18%; Calcium oxide: between 6% and 17%; Titanium dioxide: between 5% and 12%; Ferric oxide: between 12% and 20%; and Magnesium oxide: between 10% and 15%.

In a second aspect, the present disclosure relates to a paint or a coating comprising water and the composition disclosed herein.

### BRIEF DESCRIPTION OF THE FIGURES

FIG. 1 shows the evolution of the concentration of nitrogen oxide gases in a preliminary test
FIG. 2 shows the evolution of the concentration of nitrogen oxide gases in a photocatalytic test.

### DETAILED DESCRIPTION OF THE DISCLOSURE

The present disclosure relates, in a first aspect, to a composition suitable for the preparation of a paint or a coating comprising the following components, in % by weight with respect to the total weight of the composition:
Silicon dioxide: between 38% and 62%;
Aluminum oxide: between 3% and 18%;
Calcium oxide: between 6% and 17%;
Titanium dioxide: between 5% and 12%;
Ferric oxide: between 12% and 20%; and
Magnesium oxide: between 10% and 15%.

The composition as disclosed herein is preferably in the form of a powder or in a granular form. The particle size of the powder and/or the granules conforming the composition as disclosed herein is between 1 µm and 100 µm, preferably between 1 µm and 10 µm, more preferably between 1 µm and 5 µm.

The components present in the composition suitable for the preparation of a paint or coating, therefore, are mineral compounds abundant in the earth's crust and compatible with existing production chains. Therefore, the composition as disclosed herein is sustainable and has a low carbon footprint.

Indeed, silicon dioxide (SiO₂), aluminum oxide (Al₂O₃), calcium oxide (CaO), titanium dioxide (TiO₂), ferric oxide (Fe₂O₃) and magnesium oxide (MgO) are common and available components, so that the disclosed composition has low cost and is sustainable.

The composition as disclosed herein may preferably has the aluminum oxide in the form of granules having a particle size of between 3 µm and 6 µm.

The disclosed composition has the property of neutralizing greenhouse gases and improving air quality by removing pollutants through a combination of photocatalysis and catalysis. The combination of the components disclosed eliminates harmful pollutants and converts them into safe minerals. In particular, the mode of action of the disclosed composition involves several phases of action catalysis (adsorption, dissociation and diffusion), photocatalysis, carbonation and nitrification.

There are several products available in the art comprising TiO₂, as in the paintings, but they carry a % of TiO₂ in them for whitening, self-cleaning, and reduction of NOₓ, but in the process of elimination they generate CO₂ and H₂O. Simultaneous photodegradation of volatile organic compounds (VOCs) with TiO₂ and the other metal oxides comprised in the composition disclosed herein eliminates the CO₂ generated by the oxidizing reagents.

Metal oxides such as titanium oxides, zinc, iron, and silica having these characteristics, follow similar primary photocatalytic processes as light absorption, inducing a process of charge separation with the formation of positive holes that oxidize organic substrates, such as volatile organic compounds.

In the process, a metal oxide is activated by UV light, visible light, or a combination of both, and the electrons photoexcited are promoted from the valence band to the conduction band, forming an electron pair/hole (e-/h+). The photogenerated pair (e-/h+) can reduce and/or oxidize a compound adsorbed on the surface of the photocatalyst. The photocatalytic activity of the metal oxide comes from two sources: (i) generation of OH radicals by oxidation of anions OH-, (ii) generation of O₂⁻ radicals by the reduction of O₂. Both radicals as anions may react with the contaminants to degrade or transform them into less harmful by-products. The composition disclosed in the present application attracts, to the surface, the ionic charges of the compounds present in the air.

The composition disclosed herein contains microporous structure elements that regulate with high thermal and chemical stability, making the process of adsorption and desorption decomposing of VOCs by its catalytic activity and ion exchange. This process makes the composition herein disclosed a unique product because it works with sunlight, visible or both, and without the presence of light.

Mineral carbonation refers to the fixation of CO₂ by using alkali and alkaline earth oxides such as magnesium oxide (MgO), calcium oxide (CaO), and ferric oxide (Fe₂O₃). Chemical reactions between these materials and the CO₂ produced compounds like magnesium carbonate (MgCO₃), calcium carbonate (CaCO₃), and ferrous carbonate (FeCO₃).

Nitrification is the biological oxidation of ammonium (NH₄⁺) or ammonia (NH₃) with atmospheric oxygen to form nitrite (NO₂⁻), followed by oxidation of these nitrites into nitrates (NO₃⁻), with atmospheric moisture. This process is carried out, especially by nitrifying bacteria, especially from the gene *Nitrobacter.*

The composition disclosed herein is also capable of removing NOₓ. NOₓ is understood herein as a group of nitrogen oxides, primarily nitric oxide (NO) and nitrogen dioxide (NO₂), that are produced during the combustion of fossil fuels, particularly in vehicles, power plants, and industrial processes. These gases play a significant role in air pollution and contribute to the formation of smog, acid rain, and ground-level ozone, which can harm both human health and the environment.

The composition disclosed herein is able to fixate CO₂ and to eliminate NOₓ due to the presence of compounds that allow photocatalytic and catalytic oxidation of those two components, yielding non-toxic and inert by-products.

In this way, after adsorption, chemical reactions occurring with the components of the disclosed composition transform toxic products into inert by-products and, through environmental forces, are released from the substrate to the soil.

Moreover, the composition also presents bactericide and antiviral capacity, thereby providing safer and healthier air and environment.

Therefore, the composition herein disclosed has the ability to adsorb and remove greenhouse gases, such as carbon dioxide and nitrogen oxides. The byproducts generated by the adsorption of the composition disclosed are innocuous silicates and nitrates that are disseminated to the environment through wind, rain or others, being not harmful to human health or the environment. Moreover, the composition also presents bactericidal and virucidal activity.

In a second aspect, the present disclosure also relates to a paint or a coating comprising the composition disclosed herein.

Moreover, the present disclosure relates to a paint or a coating comprising water and the composition as disclosed herein.

In particular, this paint or coating according to this second aspect may be a concentrated form of a paint that can be further diluted to be applied in several applications, in particular to any type of water-based paint and coatings. This paint or coating may be in the form of a slurry, i.e., a concentrated paint or coating. Therefore, this paint works as a highly concentrated additive that will be further diluted in a variety of water-based paints and coatings.

In the context of the present disclosure, a slurry is a mixture of the composition herein disclosed as solid particles suspended in a liquid, typically water, i.e. a suspension of the composition herein disclosed in typically water. A slurry has a consistency that is thicker than water but thinner than a paste, making it easier to transport and handle.

The paint or coating may further comprise an aliphatic alcohol, siloxanes, a bactericide, an antifoaming agent, a dispersing agent, and/or combinations thereof.

The skilled person is aware of the wide variety of aliphatic alcohols, siloxanes, bactericides, anti-foaming agents and dispersing agents that may be used in a paint or a coating.

Therefore, the paint or coating may further comprise an aliphatic alcohol, siloxanes, a bactericide, an antifoaming agent and a dispersing agent.

The paint or coating according to the disclosure may further comprise monoethanolamine.

In particular, the aliphatic alcohol in the paint or coating according to the disclosure may be propyleneglycol.

In particular, the bactericide in the paint or coating according to the disclosure may comprise 2-phenoxyethanol as main component, but it may further comprise 2-phenoxyethanol.

In particular, the siloxanes in the paint or coating according to the disclosure may be selected from the group consisting of decamethylcyclopentasiloxane, dodecamethylcyclohexasiloxane, octamethylcylcotetrasil-oxane and combinations thereof.

In particular, the dispersing agent in the paint or coating according to the disclosure may be sodium polyacrylate.

In particular, the dispersing agent and/or the antifoaming agent are preferably in an amount of between 0.1% and 0.3 % by weight with respect to the total weight of the paint or coating according to the present disclosure.

In particular, the aliphatic alcohol is preferably in an amount of between 2% and 10% by weight with respect to the total weight of the paint or coating according to the present disclosure.

A particular composition in the paint or coating according to the present disclosure may contain the following components, in % by weight with respect to the total weight of the composition: Silicon dioxide: between 19% and 31%; Aluminum oxide: between 1.5% and 9%; Calcium oxide: between 3% and 8.5%; Titanium dioxide: between 2.5% and 6%; Ferric oxide: between 6% and 10%; and Magnesium oxide: between 5% and 7.5%.

The above particular composition in the paint or coating is typically in the form of a slurry. This slurry works as a concentrated additive that may be diluted in a variety of paints, particularly water-based paints, and coatings. Having this paint or coating in the form of a slurry has the advantage of scalability, and easy transport, allowing further dilutions of the paint or coating for the applications of the diluted paint or coating thereof.

When the slurry is diluted, a "conventional" paint or coating is obtained, being easy to apply and dries quickly, making it a convenient option for both residential and commercial projects. By presenting a versatile solution suitable for both interior and exterior facades, it can be applied to a wide range of architectural spaces, industrial hubs, and office buildings. The ease of application simplifies the installation process, uses less layers of material, hence contributing to its overall sustainability.

The composition according to the present disclosure is a particular combination that interacts with harmful gases CO₂ and NOₓ at chemical level to eliminate them and has antibacterial and antiviral properties. It is also capable of adsorbing VOCs, and this adsorption is in a constant manner and over the composition entire life cycle.

The use of natural mineral compounds, which are abundantly available on Earth surface, guarantees an unlimited industrial capacity for mineral supply. Moreover, the composition herein disclosed is compatible with existing industrial production chains, requiring no significant increases in production timings and offering competitive costs.

These products can be applied to a wide range of materials, including textiles, paint, resins, wood, plastic, asphalt, paper and ceramics.

As disclosed herein, the composition according to the present disclosure can be combined with water and other additives to obtain a water-based paint suitable for both interior and exterior applications, adsorbing CO₂ from the atmosphere and purifying the air from pollutants.

As disclosed herein, the paint or coating according to the present disclosure can be further diluted in water plus other additives to obtain a water-based paint suitable for both interior and exterior applications, adsorbing CO₂ from the atmosphere and purifying the air from pollutants.

Moreover, the composition according to the present composition may be combined with cellulose, cellulose acetate, PLA and other biomaterials to obtain a plastic that is able to adsorb CO₂. This plastic is suitable for injection molding, 3D printing, and other plastic production processes.

Furthermore, the composition according to the present invention may be combined with water to obtain a coating formulated for both interior and exterior wood applications, enhancing air quality. This combination may be used to protect furniture and structures such as facades, doors, windows and parquet.

The composition according to the present invention may be the basis as well for a matte coating and a printable ink designed for cardboard and paper.

The composition according to the present invention may also be applied to textiles and fabrics, thereby providing the elimination of CO₂ and having antimicrobial and bactericide characteristics without affecting the basic mechanical features of the textile material and its look and aesthetics.

Moreover, the composition according to the present invention may also be applied in concrete, so that concrete has enhanced ability to eliminate CO₂ and antimicrobial and bactericidal properties, while preserving the mechanical characteristics of the concrete.

### EXAMPLES

### Example 1: Adsorption of CO₂

The adsorption capacity of the composition as disclosed herein was tested at Applus Laboratories (Barcelona, Spain).

A test was designed to verify that the composition (in the form of powder) can adsorb CO₂. The analysis chamber is a 30 liter tank, hermetic and built in 304 stainless steel. The design of the tank includes an internal ventilation device that guarantees the circulation of gases, avoiding the accumulation of any type of deposition. Inside the tank there was the CO₂ sensor GMP252, connected to a Vaisala INDIGO520 recorder.

In the above tank, CO₂ was contacted with 30 grams of the composition as disclosed herein.

After 10 hours, the CO₂ concentration had gone from 2245 ppm to 0 ppm.

### Example 2: Saturation of CO₂

A saturation test of the composition as disclosed herein was tested at Applus Laboratories (Barcelona, Spain).

30 grams of the composition as disclosed herein saturated with CO₂ were submitted to mechanical desorption with 30 steel balls having a diameter of 10 mm for 3 hous. The procedure was based on EN 1097-1:1996 test.

The desorbed composition was subsequently submitted to a CO₂ environment as in Example 1, in the analysis chamber (30-liter stainless steel tank).

The initial amount of CO₂ detected was 2238 ppm, after two hours it was 2232 ppm and after 24 hours the amount of CO₂ was 2182 ppm, meaning that the CO₂ desorption rate during the first two hours was 3ppm/h and the amount of CO₂ desorbed after 24 hours was 57 ppm.

An equivalent test was performed mechanically desorbing with 15 steel balls having a diameter of 30 mm.

The initial amount of CO₂ was 2070 ppm, after 2 hours the amount was 1948 ppm and after 24 hours, the amount of CO₂ was 1704 ppm. Therefore, the CO₂ desorption rate during the first two hours was 61 ppm/h and the amount of CO₂ desorbed after 24 hours was 366 ppm.

### Example 3: Cyclic adsorption/desorption of CO₂

An equivalent setup as for Example 2 in Applus Laboratories (Barcelona, Spain) was made to analyze if the composition as disclosed could endure a number of adsorption/desorption cycles of CO₂.
35 grams of the composition according to the disclosure saturated with CO₂ and submitted for 3 hours to mechanical desorption by stainless steel balls having a diameter of 30 mm. The mechanical desorption time after the eighth cycle was increased to 5 hours.

After desorption, the composition was introduced in the analysis chamber described in Example 1 and the time for the sample to desorb 500 ppm of the environment (from 2000 ppm to 1500 ppm) was measured.

The same sample was submitted again to mechanical desorption and the desorbed sample submitted again to CO₂ adsorption in the tank, for a total amount of 4 cycles.

The results are shown in the following table:

**Table 1. CO₂ adsorption time of the composition after 4 desorption/adsorption cycles**

| # cycle | Initial concentration CO2 /ppm | Final concentration CO2 /ppm | Time /min |
|---|---|---|---|
| 1 | 2001 | 1501 | 26 |
| 2 | 2003 | 1500 | 22 |
| 3 | 1999 | 1500 | 38 |
| 4 | 1991 | 1502 | 26 |

Moreover, the amount of carbon and CO₂ was determined in the sample before the adsorption/desorption cycles (INITIAL SAMPLE) and after the adsorption/desorption cycle (FINAL SAMPLE) and the FINAL SAMPLE was submitted to a further CO₂ desorption, as can be shown in the following table:

**Table 2. Amount of carbon and CO₂ before and after the adsorption/desorption cycles**

| | Weight /g | Carbon weight /mg | % Carbon | % CO₂ | % CO₂ (average) |
|---|---|---|---|---|---|
| INTIAL SAMPLE | 0,10050 | 0,549 | 0,54 | 2,00 | 2,01 |
| | 0,09980 | 0,548 | 0,55 | 2,02 | |
| FINAL SAMPLE | 0,10080 | 1,720 | 1,71 | 6,27 | 6,30 |
| | 0,09980 | 1,730 | 1,73 | 6,34 | |
| | 0,10080 | 1,630 | 1,62 | 5,93 | 5,94 |
| FINAL SAMPLE "after desorption" | 0,10040 | 1,630 | 1,62 | 5,95 | |

### Example 4: Adsorption isotherm of CO₂

The measurement of the adsorption isotherm of CO₂ at 298K took place in an automatic volumetric adsorption apparatus 3Flex (Micromeritics) placed in the Porous Texture Characterization Laboratory of the University of Alicante's (Spain) Technical Research Services (SSTTI). The equipment was adjusted and verified according to the internal procedures of the laboratory. Temperature is controlled by a ISO controller apparatus (Micromeritics).

The composition according to the invention (sample) was activated by thermal treatment under vacuum by using the 3Flex (Micromeritics) degassing unit. The sample was degassed at 60°C for 20 hours. Sample mass used in the analysis was about 0.8g.

The analysis took place using a pressure table between 10⁻³Torr and 800Torr with an equilibrium time of 12 minutes. This parameter is a measure of the time the pressure must remain stable within certain limits fixed by the equipment after a dose has been introduced before considering that a pressure point is at equilibrium.

After the first measurement the sample container was opened to the air and let to stand for seven days. After this, a new degassing under vacuum at ambient temperature is performed, followed by a new measurement of a CO₂ isotherm at 298K.

This procedure was repeated until four isotherms were collected. From the four isotherms collected it was possible to calculate the amount of CO2 adsorbed at 1 atm (760+-2 Torr), as shown in the following table:

**Table 3. Adsorption of CO₂ at 1 atm**

| Sample | V_{STP} / g sample (cm³/g) | CO₂ g/ sample g | % w/w |
|---|---|---|---|
| 1 | 1,0834 | 0,00213 | 0,21 |
| 2 | 1,2134 | 0,00238 | 0,24 |
| 3 | 1,1143 | 0,00219 | 0,22 |
| 4 | 0,9967 | 0,00196 | 0,20 |

### Example 5: Nitrogen oxide removal and catalysis and photocatalysis

A test assessing nitrogen oxide removal in a photocatalytic sample following the procedure describe in ISO 22197-1:2016 was performed on the composition according to the invention in the CARTIF Foundation (Barcelona, Spain).

In particular, the composition in the form of powder was studied. 6,68 g of the composition were filled into the space equivalent to a sample in a testing chamber, having a exposed surface area of 50 cm² with a thickness of 2 cm.

The sample underwent a NOₓ removal test with the following stages:
- No pre-treatment (neither 5 hours of UV radiation nor 2 hours of washing)
- Loading of catalyst into the available space in the testing chamber of dimensions 5x10x2 cm and a mass of 6.68 g
- 15 minutes of concentration stabilization (of air flow with NO_{X} through the installation)
- 1-hour circulation through the testing chamber (without UV)
- 5 hours circulation through the testing chamber (with UV)
- Final UV shutdown and NO supply.

The conditions of the test are indicated in the following table

**Table 4. Conditions of the NOₓ adsorption test**

| **Characteristic** | **Value** | **Tolerance /±** | **Units** |
|---|---|---|---|
| Sample width | 49,5 | 0,5 | mm |
| Sample length | 99,5 | 0,5 | mm |
| NO concentration in test gas | 1,00 | 0,05 | µL/L (ppmv) |
| Relative humidity at 25°C ± 2,5°C | 50 | 5 | % |
| Temperature | 25 | 2,5 | °C |
| UVA irradiance (300-400 nm) | 10,0 | 0,5 | W·m⁻² |
| Space between sample surface and vent | 5,0 | 0,5 | mm |
| Total flow rate | 3,00 | 0,15 | L·min₋₁ |

The results obtained are indicated in the following table:

**Table 5. NO/NO₂/NOₓ adsorption in standard and photocatalytic conditions**

| | **NO** | **NO₂** | **NOₓ** | |
|---|---|---|---|---|
| C^{out}_{dark} /ppm | 0,976 | 0,016 | 0,991 | NO/NO₂/NOₓ concentration after passing through the reactor in darkness |
| C^{out}_{light} /ppm | 0,862 | 0,031 | 0,894 | NO/NO₂/NOₓ concentration after passing through the reactor with radiation |

The NOx removal (%) obtained was 9,8%, following the corresponding formula: $\left({{C}^{out}}_{dark}-{{C}^{out}}_{light}\right) / {{C}^{out}}_{dark} * 100$

Therefore, the tested sample can be classified, following the UNE 127197-1 standard, into the class 3 category (higher than 8%), the highest class a compound can achieve according to their yield in purifying NOx from the air.

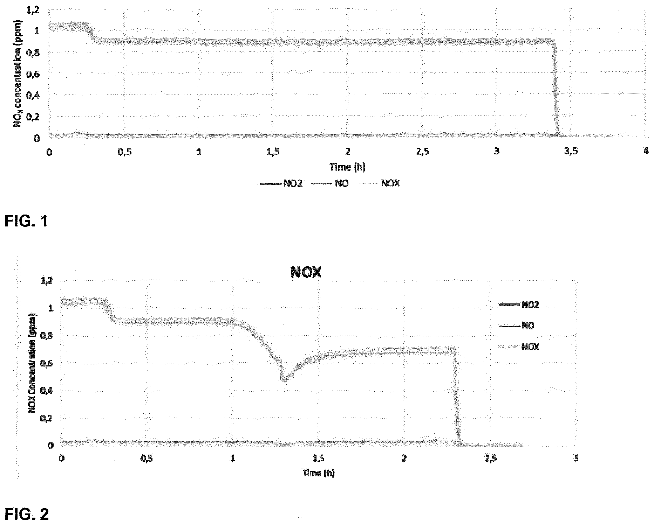

As a preliminary auxiliary test, the absorption of NO by the composition as herein disclosed was also studied. For this purpose, a test similar to the standard was conducted, but with extended periods without UVA radiation. FIG. 1 shows the concentrations of NO, NO₂, and NOₓ during this test.

The test followed partially the protocol outlined in the international reference standard used for outdoor photocatalytic materials, ISO 22197-1:2016. The test is conducted at a temperature of 22°C and 50% relative humidity of the air.

FIG. 1 shows the graph depicting the evolution of NO₂, NO, and NOₓ concentrations during the test. As can be seen, the initial segment shown represents the characterization period of contaminated air. FIG. 1 clearly illustrates the phases of the test. First, a segment of plant stabilization with contaminated air from the chamber inlet (initial concentration) is collected. Next, the contaminated air (approximately 3 hours) passes through the chamber with the catalyst without turning on the UVA lamp, and therefore without UVA radiation activating the material (No UVA concentration). Finally, the power supply is cut off to assess if the material desorbs nitrogen oxides. As can be seen, the drop is abrupt, indicating either no desorption or imperceptible desorption.

A photocatalytic assay was conducted adapted to ISO 22197-1 standard but with a shorter duration. As shown in FIG. 2, the photocatalytic removal efficiency was 20%.

The formula for calculating the removal (both with and without UVA) efficiencies is as follows: $\left({C}_{NOx , initial}-{C}_{NOx , final}\right) / {C}_{NOx , initial} * 100$

The following table shows the calculated concentrations for each segment by averaging the records taken during the test (1 every 5 seconds) and the reduction calculations using the previous formula.

**Table 6. Percentage reduction of NOₓ**

| | **NO₂ /ppm** | **NO /ppm** | **NOx /ppm** |
|---|---|---|---|
| **ABSORPTION TEST** | | | |
| Initial concentration | 0,034 | 1,036 | 1,071 |
| Final concentration without UVA | 0,025 | 0,088 | 0,913 |
| *Reduction* | *27,6%* | *14,3%* | *14,7%* |

| **SHORT PHOTOCATALYTIC TEST** | | | |
|---|---|---|---|
| Initial concentration | 0,034 | 1,036 | 1,071 |
| Final concentration without UVA | 0,029 | 0,897 | 0,926 |
| Final concentration with UVA | 0,034 | 0,677 | 0,711 |
| *Reduction* | *-13,2%* | *21,2%* | *20,1%* |

As can be observed, under the test conditions and without UVA radiation, the material absorbs, captures, or eliminates 14.7% of NOx (which will be considered equivalent to nitrogen oxides, the sum of NO and NO₂) from the inlet value. Then, the short photocatalytic test carried out after the absorption test showed a result of 20,1 % of photocatalytic removal. As observed, this value is higher than the one obtained following the standard and is well above the threshold (8%) to determine that the present composition is Class 3, belonging to the materials having the highest ability to purify NOₓ from the air.

## Claims

1. A composition suitable for the preparation of a paint or a coating comprising the following components, in % by weight with respect to the total weight of the composition:
Silicon dioxide: between 38% and 62%;
Aluminum dioxide: between 3% and 18%;
Calcium oxide: between 6% and 17%;
Titanium dioxide: between 5% and 12%;
Ferric oxide: between 12% and 20%; and
Magnesium oxide: between 10% and 15%.

2. The composition according to claim 1, **characterized in that** is in the form of a powder.

3. The composition according to claim 2, wherein the powder has a particle size of between 1 µm and 100 µm.

4. The composition according to any one of claims 1 to 3, wherein the aluminium dioxide is in the form of granules having a particle size of between 3 µm and 6 µm.

5. A paint or a coating comprising water and the composition according to any one of claims 1 to 4 diluted therein.

6. The paint or coating according to claim 5, further comprising an aliphatic alcohol, siloxanes, a bactericide, an antifoaming agent and a dispersing agent.

7. The paint or coating according to claims 5 or 6, further comprising xanthan gum.

8. The paint or coating according to any one of claims 5 to 7, further comprising monoethanolamine.

9. The paint or coating according to any one of claims 6 to 8, wherein the aliphatic alcohol is propyleneglycol.

10. The paint or coating according to any one of claims 6 to 9, wherein the bactericide comprises 2-phenoxyethanol.

11. The paint or coating according to claim 10, further comprising 3-iodine-2-propinyl butylcarbamate.

12. The paint or coating according to any one of claims 6 to 11, wherein siloxanes are selected from the group consisting of decamethylcyclopentasiloxane, dodecamethylcyclohexasiloxane, octamethylcylcotetrasiloxane and combinations thereof.

13. The paint or coating according to any one of claims 6 to 12, wherein the dispersing agent is sodium polyacrylate.

14. The paint or coating according to any one of claims 6 to 13, wherein the dispersing agent and the antifoaming agent are in an amount of between 0.1% and 0.3 % by weight with respect to the total weight of the paint or coating and/or the aliphatic alcohol is in an amount of between 2% and 10% by weight with respect to the total weight of the paint or coating.

15. The paint or coating according to any one of claims 5 to 13, wherein the paint contains the following components, in % by weight with respect to the total weight of the composition:
Silicon dioxide: between 19% and 31%;
Aluminum dioxide: between 1.5% and 9%;
Calcium oxide: between 3% and 8.5%;
Titanium dioxide: between 2.5% and 6%;
Ferric oxide: between 6% and 10%;
Magnesium oxide: between 5% and 7.5%.
